# DEMANDE DE BREVET EUROPEEN

(11) **EP 1 120 957 A1**
(43) Date de publication de la demande: **01.08.2001**
(21) Numéro de dépôt: 01410007.7
(22) Date de dépôt: 24.01.2001
(51) Int. Cl.: H04M 15/00

(54) **Circuit d'interface entre une ligne téléphonique et un terminal à traitement numérique**

(30) Priorité: 25.01.2000 FR 0000935
(71) Demandeur: Ascom Monétel SA, 07500 Guilherand-Granges (FR)
(72) Inventeur: Reig, Jean-Claude, 07500 Guilherand-Granges (FR)
(74) Mandataire: de Beaumont, Michel

(57) **Abrégé**

L'invention concerne un circuit (30) d'interface entre une ligne téléphonique et un processeur (20') de traitement numérique, comprenant une interface ligne propre à séparer les signaux émis et reçus dans des bandes de fréquences vocales et supravocales, et comportant des moyens pour successivement écrêter (33) les signaux reçus en bande supravocale et, en parallèle, filtrer (21) les signaux reçus en bande vocale ; sommer (34) les signaux issus du filtrage et de l'écrêtage ; et effectuer une conversion analogique-numérique (22) du résultat de sommation.

## Description

La présente invention concerne le domaine de la téléphonie et, plus particulièrement, l'adaptation de signaux transitant sur une ligne téléphonique à destination d'un terminal ou poste téléphonique réalisant un traitement numérique de certaines informations. L'invention concerne plus précisément un circuit d'interface entre une ligne téléphonique et un tel téléphone susceptible de recevoir deux types de signaux à savoir des signaux dans une bande de fréquences dites vocales (généralement 300 à 3400 Hz) et des signaux dans une bande de fréquences dites supravocales (généralement comprises entre 4 et 25 kHz). L'invention s'applique plus particulièrement au traitement des signaux utilisés dans des téléphones à paiement de la communication par pièce ou par carte à puce ou analogue, c'est-à-dire à un circuit d'interface entre une ligne téléphonique et un terminal requérant des échanges d'informations dans la bande des signaux supravocaux pour transférer des données relatives à l'identification et/ou l'authentification de l'utilisateur, au paiement de la communication, etc. On fera par la suite référence à des téléphones publics ou à la publiphonie pour désigner ces téléphones ou le domaine correspondant, étant entendu que l'invention s'applique également aux téléphones analogues, même dépourvus de moyen de paiement.

Des terminaux téléphoniques du type de ceux utilisés en publiphonie présentent plusieurs contraintes pour une réception de signaux à destination d'un circuit de traitement numérique qui sont liées, notamment, au support de transmission utilisé (le réseau téléphonique filaire) et au fait que ces téléphones publics sont susceptibles d'extraire leur alimentation de la ligne téléphonique elle-même sans raccordement à un réseau électrique de distribution.

Le premier élément d'un téléphone public ou analogue en relation avec la ligne téléphonique est un circuit communément désigné comme étant une interface ligne, et qui a pour but d'adapter en impédance et en niveau les signaux analogiques à traiter en provenance du réseau téléphonique. Ces signaux sont, dans l'application à la publiphonie, de deux types différents à savoir les signaux de la bande vocale et les signaux de la bande supravocale.

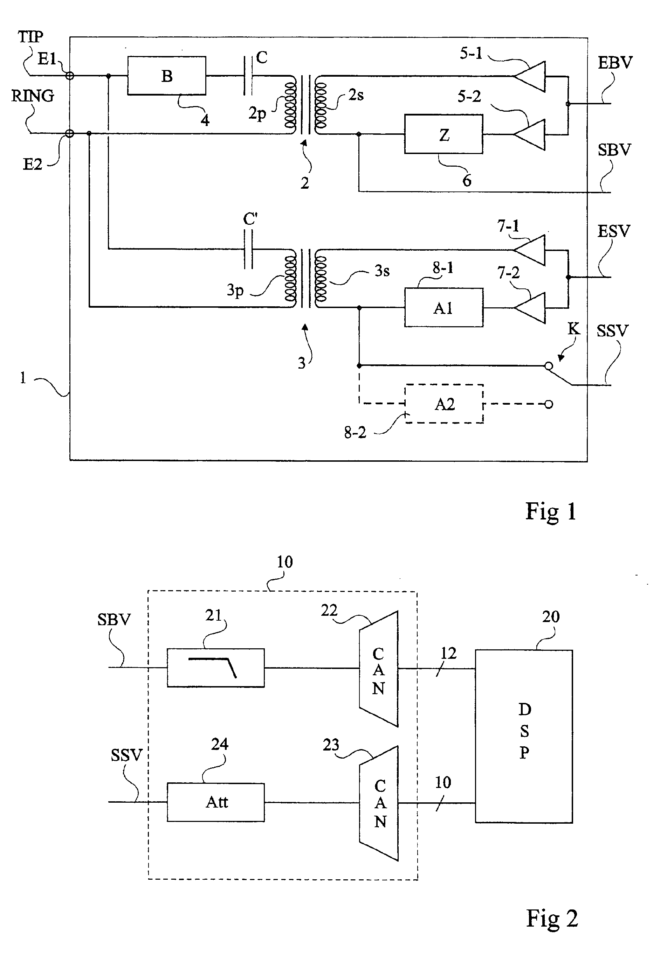

La figure 1 représente, sous forme de blocs et de façon très schématique, un exemple classique de circuit d'interface ligne 1 d'un terminal téléphonique du type auquel se rapporte la présente invention. La ligne téléphonique est symbolisée par ses deux conducteurs communément appelés TIP et RING qui sont reliés à deux bornes d'entrées E1 et E2 du circuit d'interface ligne 1.

Pour des raisons d'adaptation d'impédance, les signaux de la bande vocale et de la bande supravocale doivent être séparés. Généralement, les signaux vocaux doivent être adaptés sur une valeur d'impédance de l'ordre de 600 ohms (ou 900 ohms complexes) tandis que les signaux supravocaux doivent l'être sur une valeur de l'ordre de 200 ohms. Par conséquent, on utilise des circuits de filtrage ou circuits "bouchon" et "d'accord" en fonction des fréquences supravocales utilisées dans l'application. Le circuit d'interface ligne 1 a également une fonction de duplexeur pour permettre l'envoi et la réception de signaux vocaux ou supravocaux sur une seule ligne téléphonique. Ainsi, le circuit 1 comporte, côté terminal téléphonique (non représenté), deux entrées analogiques EBV et ESV pour l'émission respective de signaux vocaux et supravocaux ainsi que deux sorties SBV et SSV qui sont destinées à délivrer les signaux vocaux et supravocaux reçus de la ligne. On utilise généralement deux transformateurs d'isolement 2 et 3 entre les conducteurs de la ligne téléphonique et les parties respectives de l'interface 1 dédiées aux signaux vocaux et supravocaux.

Le transformateur 2 est destiné aux signaux vocaux. Son enroulement primaire 2p est relié aux deux bornes E1 et E2 d'entrée du circuit 1 en étant associé en série avec au moins un circuit bouchon ou filtre coupe-bande 4 (B) et un condensateur C. Une entrée du filtre 4 est connectée à la borne E1 tandis que sa sortie est connectée à une première électrode du condensateur C dont l'autre électrode est connectée à une première borne de l'enroulement 2p. Le rôle du condensateur C est d'éliminer l'éventuelle composante continue en sortie du filtre 4. Dans le cas où deux fréquences supravocales sont utilisées, on prévoit deux circuits bouchons 4 en série l'un avec l'autre, chaque filtre coupe-bande 4 ayant pour rôle d'éliminer une des fréquences de transmission de signaux supravocaux. L'enroulement secondaire 2s du transformateur 2 est relié, d'une part à la borne EBV par l'intermédiaire d'amplificateurs d'émission 5-1 et 5-2 et d'un circuit 6 d'adaptation d'impédance, et d'autre part à la borne SBV de sortie. Une première borne de l'enroulement 2s est connectée à la sortie de l'amplificateur 5-1 dont l'entrée est connectée à la borne EBV. Une deuxième borne de l'enroulement 2s est connectée, par l'intermédiaire du circuit d'adaptation d'impédance 6 (Z), à la sortie de l'amplificateur 5-2 dont l'entrée est elle-même connectée à la borne EBV. Les signaux vocaux reçus sont prélevés sur la deuxième borne de l'enroulement 2s qui est directement reliée à la borne SBV.

Côté signaux supravocaux, les deux bornes d'un enroulement primaire 3p du transformateur 3 sont reliées aux bornes E1 et E2 côté ligne, une des bornes de l'enroulement étant connectée par l'intermédiaire d'un condensateur C'. L'enroulement secondaire 3s du transformateur 3 est relié aux bornes ESV et SSV par un montage similaire à celui du premier transformateur 2. Deux amplificateurs d'émission 7-1 et 7-2 ont leurs entrées respectives connectées ensemble à la borne ESV. La sortie de l'amplificateur 7-1 est reliée à une première borne de l'enroulement 3s. La sortie de l'amplificateur 7-2 est toutefois reliée à la deuxième borne de l'enroulement 3s par l'intermédiaire d'un circuit d'accord 8-1 (A1) dont le rôle est de réaliser une fonction passe-bande centrée sur la fréquence utilisée pour l'émission dans la bande supravocale et une fonction d'adaptation d'impédance. La deuxième borne de l'enroulement 3s est également reliée à la borne SSV délivrant les signaux supravocaux reçus, le cas échéant, par l'intermédiaire d'un deuxième circuit d'accord 8-2 (A2) si la fréquence de réception des signaux supravocaux est différente de la fréquence d'émission. Cette alternative a été illustrée en figure 1 par un commutateur K reliant la borne SSV, soit directement à la deuxième borne de l'enroulement 3s, soit à cette borne 3s par l'intermédiaire du circuit d'accord 8-2 illustré en pointillés pour souligner son caractère optionnel. On notera que, pour réduire la distorsion en émission de signaux supravocaux, les entrées 7-1 et 7-2 sont en fait généralement déphasées de 180 ° avec un signal de rapport cyclique 1/3.

La constitution et le fonctionnement d'une interface ligne telle que représentée à la figure 1 sont parfaitement connus et ne seront pas détaillés plus avant. On notera simplement que le ou les circuits bouchons 4 réalisant les fonctions de filtrage coupe-bande sont configurés en fonction des fréquences supravocales utilisées dans l'application, de même que les circuits d'accord 8-1 et 8-2 réalisant les fonctions passe-bande, le circuit d'accord 8-1 étant réglé sur la fréquence d'émission supravocale tandis que le circuit d'accord 8-2 éventuel est réglé sur la fréquence de réception qui doit être détectée.

Les signaux vus par le terminal téléphonique de type téléphone public dans les bandes vocale et supravocale peuvent être différents selon, notamment, le réseau téléphonique (donc le pays) dans lequel ces téléphones sont implantés.

Pour ce qui concerne la bande vocale, celle-ci est généralement toujours la même et est comprise entre 300 et 3400 Hz. Dans cette bande vocale transitent les signaux vocaux proprement dits ainsi que des signaux de données transmis par des modems (par exemple, des télécopieurs) et des signaux de signalisation (en particulier, des signaux de tonalité et DTMF de numérotation). On fera référence par la suite aux signaux vocaux étant entendu qu'on englobe, dans cette définition, l'ensemble des signaux transitant dans la bande vocale donc également des signaux de données transmis par des modems.

Les signaux dans la bande supravocale peuvent quant à eux différer selon les réseaux téléphoniques. Toutefois, ces signaux sont généralement sinusoïdaux et modulés en tout et rien jusqu'à des débits ne dépassant environ 200 bauds. Parmi les configurations couramment rencontrées dans le domaine de la publiphonie pour ce qui concerne les signaux supravocaux, on trouve l'utilisation d'une fréquence d'environ 12 kHz ou d'environ 16 kHz en réception pour la taxation téléphonique, l'utilisation de ces fréquences d'environ 12 kHz en émission et d'environ 16 kHz en réception dans un mode de fonctionnement semi-duplex, l'utilisation de la fréquence d'environ 12 kHz en réception et d'une fréquence d'environ 18 kHz en émission, et l'utilisation de la fréquence d'environ 16 kHz en réception et d'une fréquence d'environ 22 kHz en émission.

Les signaux reçus en bande vocale et en bande supravocale présents sur les bornes SBV et SSV de l'interface ligne 1 de la figure 1 doivent être mis en forme afin de pouvoir être traités par le terminal téléphonique. La présente invention concerne plus particulièrement le traitement appliqué à ces signaux pour qu'ils puissent être utilisés par des circuits numériques.

Dans des téléphones publics relativement anciens, les terminaux effectuent un traitement entièrement analogique des signaux (à base généralement d'amplificateurs opérationnels et de circuits intégrés spécialisés). Plus récemment, on a cherché à bénéficier des avantages des traitements numériques et, en particulier, de la versatilité que permet l'utilisation d'un processeur de traitement numérique du signal pour adapter un même équipement matériel selon le réseau téléphonique sur lequel il est implanté. Cette adaptation concerne, en particulier, les fréquences de la bande supravocale utilisées ainsi que les fonctions d'échange de données, d'authentification de l'utilisateur et de paiement de la communication qui peuvent différer fortement d'un réseau à l'autre. Les signaux délivrés par l'interface ligne 1 classique sur les bornes SBV et SSV doivent alors subir un traitement préalable à leur conversion analogique-numérique à destination du processeur de traitement numérique du signal.

L'application à la publiphonie pose, par rapport à d'autres types de terminaux téléphoniques filaires ou par rapport au téléphone mobile, des problèmes particuliers.

Une première difficulté est liée à la proximité des fréquences (supravocales) de transfert des informations par rapport à la bande vocale. En particulier, dans les téléphones mobiles, les signaux vocaux qui sont modulés sur une fréquence très élevée (par exemple, 900 MHz) ne risquent pas d'être mélangés à la bande vocale de base (inférieure à 4 kHz). Dans la publiphonie, l'utilisation des signaux supravocaux reste à des fréquences qui sont proches de la bande des fréquences vocales. Cette contrainte est liée à l'utilisation du réseau téléphonique filaire comme support de transmission et à sa bande passante. En particulier, la publiphonie requiert un partage du spectre fréquentiel de façon analogique.

Par rapport à d'autres terminaux téléphoniques classiques raccordés au réseau, un problème de la publiphonie (que l'on peut cependant retrouver dans d'autres terminaux auxquels s'appliquera alors la présente invention) est la faible quantité d'énergie généralement disponible pour le terminal. En effet, bien souvent les téléphones publics sont installés sans autre raccordement que celui à la ligne téléphonique. Par conséquent, les terminaux doivent tirer leur énergie directement de l'énergie de la ligne sans aucun raccordement à un réseau d'alimentation électrique.

Une autre contrainte de la publiphonie est liée aux impulsions de taxation en cours de communication. Ces impulsions de taxation utilisent la bande supravocale et sont envoyées par le central au téléphone en fonction de la durée de la communication. Elles servent, soit à décompter des taxes sur une carte à puce, soit à provoquer la consommation de pièces de monnaie dans le téléphone public. Chaque pays (chaque réseau téléphonique) fixe la fréquence supravocale utilisée pour les impulsions de taxe ainsi que le niveau de tension minimal auquel le téléphone public doit être capable de détecter la taxe et le niveau de tension maximal que ce téléphone doit supporter. Généralement, les fréquences utilisées pour les impulsions de taxation sont autour de 12 kHz ou autour de 16 kHz. Les plages de fonctionnement en fréquence sont le plus souvent comprises entre 11,88 et 12,12 kHz pour une fréquence nominale de 12 kHz. Cette plage est comprise entre 15,8 et 16,2 kHz pour une fréquence nominale de 16 kHz. Le niveau de tension minimum auquel le téléphone public doit détecter une impulsion de taxation est, selon le pays, compris entre 10 et environ 130 mV. Le niveau maximal de tension que doit supporter le téléphone public en réception de fréquences supravocales est compris, toujours selon le pays, entre 2 et environ 10 V. On notera dès à présent qu'un tel niveau de tension de 10 V est très nettement supérieur au niveau maximum utilisé pour la transmission dans la bande vocale. En effet, les signaux sont, dans la bande vocale, généralement compris entre -40 dBm et 0 dBm. On peut considérer que 0 dBm correspond approximativement à 775 mV efficaces. Les signaux vocaux sont le plus souvent exprimés en dBm. Pour ce qui concerne les signaux supravocaux, ceux-ci sont généralement exprimés en niveaux de tension efficace. Pour les besoins de la présente description, on effectuera des conversions approximatives permettant de comparer les niveaux de tension de ces signaux. On peut donc considérer que les signaux supravocaux peuvent être compris, tous pays confondus, entre -38 dBm (10 mV) et 22 dBm (10 V).

La figure 2 représente, de façon très schématique et sous forme de blocs, un exemple classique de circuit 10 d'interface du type auquel se rapporte la présente invention. Ce circuit d'interface est destiné à être intercalé entre les sorties SBV et SSV d'un circuit d'interface ligne 1 tel qu'illustré par la figure 1 et un circuit de traitement numérique des signaux 20 (DSP). Le circuit d'interface 10 a donc en particulier pour rôle de procéder à la conversion analogique-numérique des signaux. Dans la solution classique illustrée par la figure 2, le circuit 10 comprend, pour les signaux dans la bande vocale, un filtre 21 de type passe-bas dont le rôle est d'éliminer toutes les fréquences supérieures à environ 4 kHz pour, en particulier, éliminer le bruit susceptible d'être présent sur la sortie SBV. La sortie du filtre 21 est envoyée sur l'entrée analogique d'un premier convertisseur analogique-numérique 22 (CAN) dont le rôle est de numériser les signaux vocaux. Généralement, la résolution souhaitée pour les signaux présents dans la bande vocale requiert un convertisseur analogique-numérique sur 12 bits, de sorte que la sortie du circuit 22 est une sortie numérique sur 12 bits à destination du circuit DSP 20.

Côté fréquences supravocales, les signaux présents sur la borne SSV doivent être atténués avant leur conversion dans un deuxième convertisseur analogique-numérique 23. Le besoin d'atténuer les signaux supravocaux est lié au niveau maximum d'entrée admissible par le convertisseur analogique-numérique. En effet, les convertisseurs généralement utilisés en micro-électronique supportent une tension d'entrée inférieure à 4 V crête à crête, par exemple ± 1,6 V crête, soit environ 4 dBm. Un tel niveau de tension comparé au niveau maximum de 10 V que peut recevoir la borne SSV nécessite bien évidemment une diminution. Ainsi, la borne SSV est reliée, en entrée du circuit 10, à un circuit atténuateur 24 (Att) dont la sortie est connectée à l'entrée analogique du convertisseur 23. Pour les signaux supravocaux, un convertisseur sur 10 bits suffit généralement, de sorte que la sortie du circuit 23 est une sortie numérique sur 10 bits envoyée au circuit DSP 20.

Le recours à un convertisseur sur 12 bits côté bande vocale est lié à la sensibilité requise en dynamique. En effet, certains signaux, en particulier dans le cas de transmissions par modem, doivent être détectés à un niveau très faible de -48 dBm. Sauf à prévoir des algorithmes de traitement du signal au sein du DSP qui deviendrait considérablement plus complexe qu'à l'accoutumé, trop sensible au bruit et trop lent en détection, on doit disposer de 3 bits de résolution. Comme le niveau maximum susceptible d'être reçu est de 0 à quelques dBm (on prévoit généralement 4 dBm par sécurité), la réponse dynamique totale du convertisseur doit être de l'ordre de 70 dB (48+3*6+4) en considérant une résolution d'un bit pour 6 dBm. Cela correspond généralement à la réponse d'un convertisseur 12 bits classique.

Côté signaux supravocaux, la dynamique étant de l'ordre de 60 dB (10 mV à 10 V), on doit utiliser un convertisseur d'au moins 10 bits.

Un inconvénient de la solution classique illustrée par la figure 2 est qu'il est nécessaire de disposer de deux convertisseurs analogique-numérique. De plus, le circuit de traitement numérique doit gérer ces deux convertisseurs et comprendre, en particulier, le nombre d'entrées correspondant. Le fait que le circuit de traitement numérique 20 doit traiter deux sorties numériques provenant de deux convertisseurs distincts augmente la consommation du système et le coût de la solution.

On connaît également d'autres systèmes de traitement numérique du signal qui se contentent d'exploiter les signaux dans la bande vocale. Cela revient à ne considérer que la partie de traitement des signaux vocaux dans le schéma de la figure 2. Dans un tel cas, les signaux supravocaux sont traités de façon classique par des moyens analogiques. On retrouve alors l'inconvénient d'absence de versatilité d'une telle solution.

Un objet de la présente invention est de proposer un circuit d'interface entre une ligne téléphonique (plus précisément, un circuit d'interface ligne analogique) et un ou plusieurs circuits de traitement numérique des signaux, qui pallient les inconvénients des solutions connues.

Un autre objet de la présente invention est de proposer une solution qui soit particulièrement peu gourmande en énergie.

L'invention vise également à proposer une solution qui soit compatible avec l'utilisation de différentes fréquences de transmission dans la bande supravocale.

La présente invention vise en outre à optimiser le recours à la conversion analogique-numérique et à un circuit de traitement numérique pour minimiser la consommation.

Pour atteindre ces objets, la présente invention prévoit un circuit d'interface entre une ligne téléphonique et un processeur de traitement numérique, comprenant une interface ligne propre à séparer les signaux émis et reçus dans des bandes de fréquences vocales et supravocales, et comportant des moyens pour successivement : écrêter les signaux reçus en bande supravocale et, en parallèle, filtrer les signaux reçus en bande vocale ; sommer les signaux issus du filtrage et de l'écrêtage ; et effectuer une conversion analogique-numérique du résultat de sommation.

Selon un mode de réalisation de la présente invention, lesdits moyens comportent un unique convertisseur analogique-numérique.

Selon un mode de réalisation de la présente invention, le nombre de bits dudit convertisseur est fixé par la résolution souhaitée pour la conversion des signaux en bande vocale.

Selon un mode de réalisation de la présente invention, la fréquence d'échantillonnage du convertisseur est choisie en fonction des fréquences supravocales utilisées.

Selon un mode de réalisation de la présente invention, une seule fréquence est utilisée en réception de signaux supravocaux.

Selon un mode de réalisation de la présente invention, le niveau d'écrêtage des signaux en bande supravocale est choisi en fonction du niveau maximal supportable en entrée analogique des moyens de conversion analogique-numérique.

La présente invention prévoit également un téléphone du type comprenant au moins un circuit de traitement numérique d'informations transmises dans une bande de fréquences supravocales, et un circuit d'interface entre une ligne téléphonique et ce circuit de traitement numérique.

Selon un mode de réalisation de la présente invention, le niveau d'écrêtage des signaux supravocaux est d'environ -7 dBm.

Selon un mode de réalisation de la présente invention, la bande de fréquences supravocales est comprise entre 4 et 22 kHz.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente, de façon très schématique, un exemple de circuit d'interface de ligne analogique d'un système de téléphonie auquel s'applique la présente invention ;
la figure 2 représente un exemple classique de circuit d'interface vers un circuit de traitement numérique ;
la figure 3 représente, de façon très schématique, un mode de réalisation d'un circuit d'interface selon la présente invention ; et
la figure 4 illustre, par une caractéristique amplitude-fréquence, le fonctionnement d'un circuit d'interface selon l'invention.

Les mêmes éléments ont été désignés par les mêmes références aux différentes figures. Pour des raisons de clarté, seuls les éléments du circuit d'interface et du terminal téléphonique qui sont nécessaires à la compréhension de l'invention ont été représentés aux figures et seront décrits par la suite. En particulier, les traitements appliqués aux signaux vocaux et supravocaux par les circuits de traitement numérique sont parfaitement classiques. Par conséquent, ces circuits ne seront pas détaillés. De plus, côté ligne, l'invention reçoit des signaux analogiques provenant d'un circuit d'interface de ligne classique.

Pour optimiser le recours au circuit du traitement numérique et la conversion analogique-numérique d'un point de vue d'encombrement et de consommation, l'invention prévoit de n'utiliser qu'un convertisseur analogique-numérique, que ce soit pour les signaux en bande vocale ou en bande supravocale.

Une première solution serait de prévoir d'abord un filtrage passe-bas des signaux en bande vocale et une atténuation des signaux supravocaux. Puis, on effectuerait une combinaison (sommation) de ces signaux avant de les introduire dans un unique convertisseur analogique-numérique. En effet, une fois sous forme numérique, la séparation des signaux en bande vocale et en bande supravocale peut être effectuée par les circuits de traitement numérique du signal à partir des fréquences respectives des signaux utilisés.

Toutefois, une telle solution conduirait à l'utilisation d'un convertisseur ayant une résolution très élevée (en pratique, seize bits). En effet, comme cela a été indiqué précédemment, l'amplitude crête à crête d'entrée d'un convertisseur est généralement limitée à ± 1,6 V, soit 4 dBm. Par conséquent, pour être en mesure de détecter le niveau maximum de la fréquence supravocale (10 V efficaces, soit 22 dBm), une fois atténué et ajouté à l'amplitude maximale des signaux vocaux (0 dBm), les signaux supravocaux doivent être très fortement atténués (en pratique d'environ 30 dB). Il en découle que le niveau minimum du signal en bande supravocale (10 mV efficaces soit -38 dBm) devient à un niveau très faible de l'ordre de -70 dBm. De plus, trois bits supplémentaires (représentant environ 18 dB) sont nécessaires pour que le convertisseur puisse détecter ces signaux supravocaux qui sont bruités par les signaux en bandes vocales. Cela conduit (en tenant compte des 4 dBm liés aux signaux vocaux) à une dynamique du convertisseur analogique-numérique d'environ 90 dB. Par conséquent, on doit recourir à un convertisseur analogique d'au moins 15 bits (en pratique, 16 bits).

Un inconvénient de l'utilisation d'un tel convertisseur de forte résolution est alors, outre son coût élevé, qu'il consomme beaucoup plus qu'un convertisseur 12 bits. Une telle solution n'est donc pas adaptée à des terminaux de type téléphone public ne recevant pas d'alimentation secteur. De plus, le convertisseur 16 bits est plus sensible aux bruits de l'alimentation et le circuit de traitement numérique doit alors disposer d'un algorithme capable de détecter des signaux (en fréquence supravocale) ayant un niveau inférieur à ceux de la bande vocale, ce qui conduit à un circuit relativement complexe.

Ainsi, la présente invention prévoit un pré-traitement différent des signaux reçus dans la bande supravocale. Selon la présente invention, ces signaux sont écrêtés et non plus atténués. Un avantage d'écrêter les signaux dans la bande supravocale est que cela ne modifie pas le niveau de tension minimum qu'est susceptible de recevoir le convertisseur. Par conséquent, il n'est désormais plus nécessaire d'en augmenter la résolution.

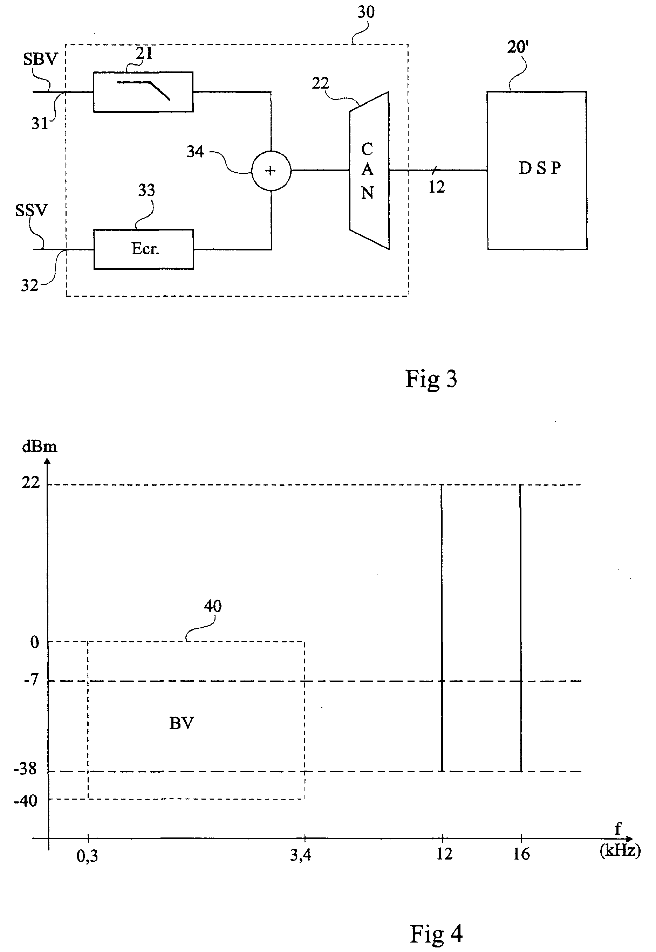

La figure 3 représente, de façon très schématique et sous forme de blocs, un mode de réalisation d'un circuit d'interface 30 selon la présente invention. Ce circuit comporte deux entrées analogiques 31 et 32 qui sont destinées à être respectivement connectées aux sorties SBV et SSV d'une interface ligne classique telle qu'illustrée par la figure 1. L'entrée 31, destinée aux signaux en bande vocale, est envoyée sur un filtre passe-bas (généralement un filtre de Butterworth) 21 classique. L'entrée 32, destinée aux signaux dans la bande supravocale est envoyée sur un écrêteur 33. Les sorties respectives du filtre 21 de l'écrêteur 33 sont sommées au moyen d'un sommateur 34 dont la sortie est envoyée sur l'entrée analogique d'un convertisseur analogique-numérique 22. Selon l'invention, on peut choisir le niveau d'écrêtage par le circuit 33 pour que la résolution du convertisseur soit fixée par la bande vocale. Ainsi, en reprenant l'exemple classique illustré par la figure 2, on utilisera selon l'invention un convertisseur sur 12 bits. Les sorties numériques du convertisseur 22 sont alors envoyées en entrée d'un circuit de traitement numérique du signal 20' chargé, de façon classique, d'exploiter les signaux reçus.

Selon l'invention, l'écrêteur 33 est dimensionné en fonction des caractéristiques d'entrée électrique du convertisseur numérique. En effet, on doit écrêter le signal à un niveau tel qu'il évite la saturation de l'entrée analogique du convertisseur. Par conséquent, en reprenant l'exemple d'un convertisseur capable de recevoir des signaux en ± 1,6 V efficaces soit 4 dBm, le signal présent sur la borne 32 sera écrêté à un niveau de -7 dBm. On notera que, comme la fonction est une fonction d'écrêtage, le niveau minimum de 10 mV efficaces susceptible d'être reçu par le circuit reste à ce niveau, soit -38 dBm. Pour la détection des signaux en bande supravocale proprement dit, 3 bits restent nécessaires à la détection comme dans le cas évoqué précédemment. Par conséquent, en ajoutant les 4 dB des signaux issus du filtre 21 en bande vocale qui relèvent bien entendu le niveau global, la dynamique du convertisseur doit alors être d'environ 60 dB (38 dB pour le niveau le plus faible en bande supravocale, plus 18 dB pour les 3 bits de détection des signaux supravocaux, plus 4 dB pour tenir compte de l'augmentation de niveau liée à la sommation). On constate que 10 bits suffisent comme dans le cas de la figure 2 pour détecter la bande supravocale. Par conséquent, les 12 bits du convertisseur analogique-numérique qui sont choisis par ailleurs pour la bande vocale suffisent.

La présente invention tire profit de plusieurs particularités de l'utilisation de signaux en bande supravocale dans le domaine de la publiphonie ou analogue.

En effet, on aurait pu penser que l'écrêtage des signaux nuirait à leur détection en raison des données que transmettent ces signaux. Toutefois, comme les signaux transmis en bande supravocale sont des signaux approximativement sinusoïdaux et que la modulation utilisée est, dans le domaine de publiphonie considéré, une modulation en tout ou rien, il n'est pas gênant d'écrêter ces signaux, et cela n'entraîne aucune perte d'information.

Ainsi, un premier avantage de l'invention est qu'elle s'affranchit du problème d'atténuation du seuil inférieur sans nuire pour autant aux capacités de détection. L'invention préserve ainsi à la fois les seuils et la dynamique de détection.

De plus, on tire également profit d'un choix particulièrement adapté de la fréquence d'échantillonnage du convertisseur analogique-numérique. En effet, de tels convertisseurs sont, pour la bande supravocale, généralement utilisés avec une fréquence d'échantillonnage de 48 kHz. Cette fréquence d'échantillonnage est particulièrement adaptée aux fréquences utilisées dans la transmission des fréquences supravocales de 12 et 16 kHz (en particulier pour les impulsions de taxation) dans la mesure où les fréquences de repliement des harmoniques du 12 et du 16 kHz soit retombent sur la fréquence fondamentale soit se retrouvent hors de la bande. Par conséquent, l'algorithme de filtrage du circuit numérique du traitement n'a pas besoin d'être renforcé en aval pour éliminer d'éventuelles harmoniques.

En particulier, on notera que cela ne serait pas le cas si le terminal devait recevoir des signaux à des fréquences de 12 et 18 kHz. En effet, dans ce cas l'harmonique 2 du 18 kHz se replierait sur la fréquence de 12 kHz. Le terminal ne serait alors pas capable de détecter facilement les signaux utiles à 12 kHz ce qui, sauf à prévoir une élimination d'harmoniques côté circuit de traitement numérique, conduirait à des fausses détections. Toutefois, si la fréquence de 18 kHz est utilisée en émission, sa deuxième harmonique ne gêne pas dans la mesure où elle est filtrée par le circuit accordé à 12 kHz (8-1, figure 1) et ne parvient donc pas jusqu'au convertisseur. La fréquence fondamentale à 18 kHz est elle aussi atténuée, donc ne sera pas écrêtée et ne générera pas d'harmoniques. Par conséquent, la solution préconisée par l'invention fonctionne bien pour des fréquences supravocales de 12 kHz en réception et de 18 kHz en émission comme il en existe parfois.

La figure 4 illustre le fonctionnement d'un circuit d'interface selon l'invention. Cette figure représente la caractéristique amplitude-fréquence des signaux susceptibles d'être utilisés selon l'invention. La plage de fréquences comprise entre 0,3 et 3,4 kHz constitue la bande vocale (BV). Cette bande vocale est illustrée en figure 4 par un pointillé 40. D'un point de vue amplitude, les signaux dans la bande vocale sont généralement compris entre 0 et -40 dBm. Côté fréquences supérieures, on a illustré un exemple de deux fréquences de 12 et 16 kHz. Ces fréquences sont susceptibles d'être présentes entre des niveaux compris entre environ 22 et -38 dBm, correspondant respectivement à des amplitudes 10 V et de 10 mV efficaces. Selon ce mode de réalisation de l'invention, ces signaux en bande supravocale sont écrêtés au niveau de -7 dBm. Comme il s'agit de signaux approximativement sinusoïdaux, cet écrêtage ne gêne en rien la détection. On notera également que les signaux en bande vocale ne sont quant à eux pas écrêtés, ce qui préserve également une détection correcte.

Ainsi, la solution préconisée par l'invention se prête particulièrement bien à des terminaux téléphoniques pour lesquels on souhaite qu'un circuit de traitement numérique du signal traite à la fois des signaux en bande vocale et en bande supravocale, et pour lesquels on souhaite également une consommation minimale.

On notera que l'invention s'applique quel que soit le mode d'échange d'informations prévu en bande supravocale entre le terminal (téléphone public) et le système de gestion des téléphones publics. En particulier, certains traitements peuvent être effectués dans le téléphone (on parle alors de "off-line") ou, à l'inverse, nécessiter des échanges répétitifs pendant la communication avec le système (on parle alors de "on-line"). On notera que, dans tous les cas, une seule fréquence est présente en réception dans la bande supravocale. Ceci constitue encore une particularité dont tire profit la présente invention.

On notera également, en comparant une solution avec atténuation par rapport à une solution avec écrêtage selon la présente invention, que le gain est de plus de 10 dB avec un système selon l'invention. Ce gain profite directement à la résolution du convertisseur analogique-numérique et la simplicité des algorithmes du processeur de traitement numérique du signal, donc à la consommation.

A titre d'exemple particulier de réalisation et pour illustrer un avantage de la solution choisie, la consommation d'un circuit d'interface et du processeur de traitement numérique du signal serait de l'ordre de 7 milliwatts en utilisant un convertisseur 16 bits après atténuation des signaux en bande supravocale, alors que cette consommation n'est plus que de 5 milliwatts en reprenant les mêmes fonctionnalités au moyen d'un circuit selon l'invention.

Bien entendu, la présente invention est susceptible de diverses variantes et modifications qui apparaîtront à l'homme de l'art. En particulier, la réalisation pratique des différents éléments du circuit d'interface de l'invention (filtre, écrêteur, sommateur et convertisseur), et leurs dimensionnements en fonction des niveaux de l'application, sont à la portée de l'homme du métier à partir des indications fonctionnelles données ci-dessus et des circuits disponibles aujourd'hui. De plus, bien que la présente invention ait été décrite en relation particulière avec des fréquences d'émission et de réception supravocales données, ces fréquences pourront être modifiées pourvu d'adapter également la fréquence d'échantillonnage du convertisseur afin de rester compatible avec l'absence de repliement caractéristique de l'invention. En outre, on notera que d'autres résolutions de convertisseurs pourront être utilisées en fonction, notamment, de la résolution souhaitée pour la bande vocale.

## Revendications

1. Circuit (30) d'interface entre une ligne téléphonique et un processeur (20') de traitement numérique, comprenant une interface ligne (1) propre à séparer les signaux émis et reçus dans des bandes de fréquences vocales et supravocales, caractérisé en ce qu'il comporte des moyens pour successivement :
écrêter (33) les signaux reçus en bande supravocale et, en parallèle, filtrer (21) les signaux reçus en bande vocale ;
sommer (34) les signaux issus du filtrage et de l'écrêtage ; et
effectuer une conversion analogique-numérique (22) du résultat de sommation.

2. Circuit d'interface selon la revendication 1, caractérisé en ce que lesdits moyens comportent un unique convertisseur analogique-numérique (22).

3. Circuit d'interface selon la revendication 2, caractérisé en ce que le nombre de bits dudit convertisseur (22) est fixé par la résolution souhaitée pour la conversion des signaux en bande vocale.

4. Circuit d'interface selon la revendication 2 ou 3, caractérisé en ce que la fréquence d'échantillonnage du convertisseur est choisie en fonction des fréquences supravocales utilisées.

5. Circuit d'interface selon la revendication 4, caractérisé en ce qu'une seule fréquence est utilisée en réception de signaux supravocaux.

6. Circuit d'interface selon l'une quelconque des revendications 1 à 5, caractérisé en ce que le niveau d'écrêtage des signaux en bande supravocale est choisi en fonction du niveau maximal supportable en entrée analogique des moyens (22) de conversion analogique-numérique.

7. Téléphone du type comprenant au moins un circuit (20') de traitement numérique d'informations transmises dans une bande de fréquences supravocales, caractérisé en ce qu'il comprend un circuit d'interface (30) selon l'une quelconque des revendications 1 à 6.

8. Téléphone selon la revendication 7, caractérisé en ce que le niveau d'écrêtage des signaux supravocaux est d'environ -7 dBm.

9. Téléphone selon la revendication 7 ou 8, caractérisé en ce que la bande de fréquences supravocales est comprise entre 4 et 22 kHz.
